# FASCICULE DE BREVET EUROPEEN

(11) **EP 3 823 882 B1**
(45) Date de publication et mention de la délivrance du brevet: **07.09.2022**
(21) Numéro de dépôt: 19748762.2
(22) Date de dépôt: 18.07.2019
(51) Int. Cl.: B62D 35/00, B60K 11/08, B60R 16/023

(54) **PIECE EXTERIEURE DE VEHICULE AUTOMOBILE A SYSTEME DE CONTROLE D'INTEGRITE**
KRAFTFAHRZEUGAUSSENTEIL MIT UNVERSEHRTHEITSÜBERWACHUNGSSYSTEM
EXTERNAL COMPONENT OF A MOTOR VEHICLE WITH AN INTEGRITY CONTROL SYSTEM

(30) Priorité: 18.07.2018 FR 1856634
(43) Date de publication de la demande: 26.05.2021
(73) Titulaire: Compagnie Plastic Omnium, 69007 Lyon (FR)
(72) Inventeur: UTTER, Jérôme, 01500 BETTANT (FR)
(74) Mandataire: LLR
(86) Numéro de dépôt international: PCT/EP2019/069394
(87) Numéro de publication internationale: WO 2020/016368

(56) Documents cités:
- DE-A1-102015 002 431
- FR-A1- 3 012 107

## Description

La présente invention concerne le domaine des véhicules automobiles. En particulier, l'invention concerne une pièce extérieure de véhicule automobile, et notamment une pièce mobile telle qu'une lame aérodynamique rétractable, destinée à être montée sur un véhicule automobile, et susceptible de subir des chocs pouvant affecter sa fonction.

Le document FR 3 012 107 concerne une pièce extérieure du véhicule automobile.

Les véhicules automobiles comportent des pièces extérieures qui peuvent être soumises à des chocs, par exemple contre des obstacles présents sur la route. Un tel choc a pour conséquence d'endommager la pièce, au point de pouvoir impacter l'efficacité de sa fonction.

Il est également possible que des morceaux de la pièce se détachent et tombent sur la route. Or, il existe une contrainte de plus en plus forte des réglementations pour ne pas laisser de débris sur les routes. Cette contrainte engendre un besoin d'alerte immédiat dès détection d'une anomalie sur l'intégrité de la pièce, pour que l'automobiliste puisse tout mettre en oeuvre pour ne pas laisser de débris sur la route.

Ces problèmes se rencontrent notamment sur des pièces mobiles, et notamment des pièces rétractables telles qu'une lame aérodynamique rétractable, destinée à être montée sur un véhicule automobile, notamment à l'avant.

En effet, afin de réduire la trainée aérodynamique des véhicules modernes, on connaît l'usage d'une lame aérodynamique mobile de sous-bassement disposée à l'avant du véhicule et formant un dispositif déflecteur d'un flux d'air passant sous le véhicule afin de réduire et orienter ce flux d'air. Cette lame aérodynamique est articulée autour d'un axe transversal maintenu par des paliers reliés à une partie fixe du véhicule comme par exemple le châssis de la face avant technique. La lame aérodynamique de sous-bassement est entrainée en rotation autour de son axe entre une position déployée (ouverte) et une position rétractée (escamotée, repliée, fermée) par des actionneurs, par exemple de type électrique.

Lorsque la lame aérodynamique rétractable est en position rétractée sous le bouclier avant, elle est protégée à l'égard des chocs contre des obstacles tels que les bords de trottoir. Cette position repliée sous le bouclier convient par conséquent pour la circulation à faible vitesse dans les villes ou sur des routes présentant des défauts de surface ou un revêtement en pierre par exemple.

En situation de roulage, c'est-à-dire lorsque le véhicule fonctionne, et lorsque la lame aérodynamique rétractable est en position déployée, la lame peut être soumise à des chocs contre des obstacles présents sur la route, tels que des cailloux par exemple.

Un tel choc a pour conséquence d'endommager la lame, au point de pouvoir la fissurer, voire de la briser en plusieurs morceaux. Une lame endommagée ne peut remplir efficacement sa fonction aérodynamique, et le gain aérodynamique, donc le gain de consommation de carburant, sont limités. A l'heure actuelle, seule une vérification oculaire de l'état de la lame permet de détecter un endommagement de cette dernière susceptible de limiter ses fonctions.

Cependant, lorsque la lame aérodynamique rétractable est en position rétractée sous le bouclier avant, elle n'est pas directement visible depuis l'extérieur du véhicule. Cela demande une attention particulière, et nécessite notamment de regarder sous le véhicule.

Or, une telle opération n'est généralement jamais réalisée par le conducteur sortant de son véhicule, si bien qu'il ne peut pas savoir que sa lame a perdu en efficacité, et qu'il consomme davantage de carburant.

L'invention a pour but de remédier à ces inconvénients en fournissant une pièce extérieure de véhicule automobile, telle qu'un système aérodynamique rétractable, comprenant un système de contrôle de l'intégrité d'un élément de la pièce (lame aérodynamique par exemple).

Ainsi, l'objet de l'invention concerne une pièce extérieure de véhicule automobile, comprenant un élément, et comportant un système de contrôle de l'intégrité de cet élément. Le système de contrôle comporte un circuit électrique positionné sur une face de l'élément et relié à un dispositif de détection apte à déterminer une variation d'un paramètre électrique du circuit électrique induite par une déformation dudit circuit électrique.

La pièce peut en outre comporter l'une ou plusieurs des caractéristiques suivantes, prises seules ou en combinaison :
- le dispositif de détection est apte à déterminer l'état ouvert ou fermé du circuit électrique ;
- le circuit électrique suit sensiblement la périphérie de la face sur laquelle le circuit électrique est positionné ;
- le circuit électrique est positionné dans une zone centrale de la face sur laquelle le circuit électrique est positionné ;
- l'élément est mobile ;
- l'élément est rétractable ;
- le circuit électrique est positionné dans une zone d'un axe de rotation de l'élément rétractable ;
- le circuit électrique est rapporté sur la face par surmoulage, collage, adhésivage, soudure ou fixation mécanique telle qu'une agrafe, ou un rivet ;
- le circuit électrique comporte un fil conducteur dont chaque extrémité est reliée au dispositif de détection ;
- le fil conducteur est apte à être coupé lorsque l'élément mobile est brisé à la suite d'un impact ;
- le dispositif de détection est apte à faire circuler un courant dans le circuit électrique, de préférence un courant d'intensité inférieure à une centaine de milliampères ;
- le système de contrôle de l'intégrité de l'élément est apte à envoyer un message à un calculateur du tableau de bord d'un véhicule, lorsque le dispositif de détection détecte une variation caractéristique du paramètre électrique ;
- le système de contrôle de l'intégrité de l'élément est apte à envoyer un message à un calculateur du tableau de bord d'un véhicule, lorsque le dispositif de détection détecte que le circuit électrique est ouvert ;
- la pièce extérieure constitue un système aérodynamique rétractable pour véhicule automobile comprenant au moins une lame aérodynamique ;
- la lame aérodynamique comporte une face destinée à faire front à un flux d'air lorsqu'il est monté sur un véhicule en mouvement, est une face opposée, le circuit électrique étant positionné sur la face opposée ;
- le paramètre électrique est l'ampérage du circuit électrique.

L'invention sera mieux comprise à la lecture des figures annexées, qui sont fournies à titre d'exemples et ne présentent aucun caractère limitatif, dans lesquelles :
- la figure 1 est un schéma illustrant un pare-chocs de véhicule automobile muni d'un exemple de système aérodynamique rétractable selon l'invention ;
- la figure 2 illustre le système aérodynamique rétractable de la figure 1, après un impact subi par la lame aérodynamique ;

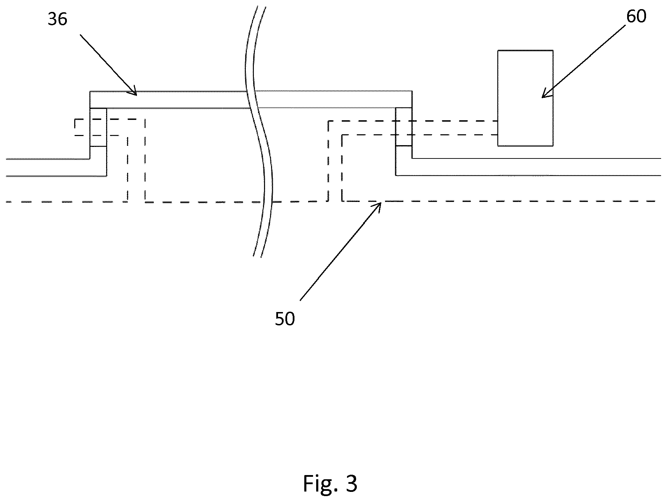

- la figure 3 illustre le passage d'un fil conducteur dans une zone de l'axe de rotation de la lame aérodynamique.

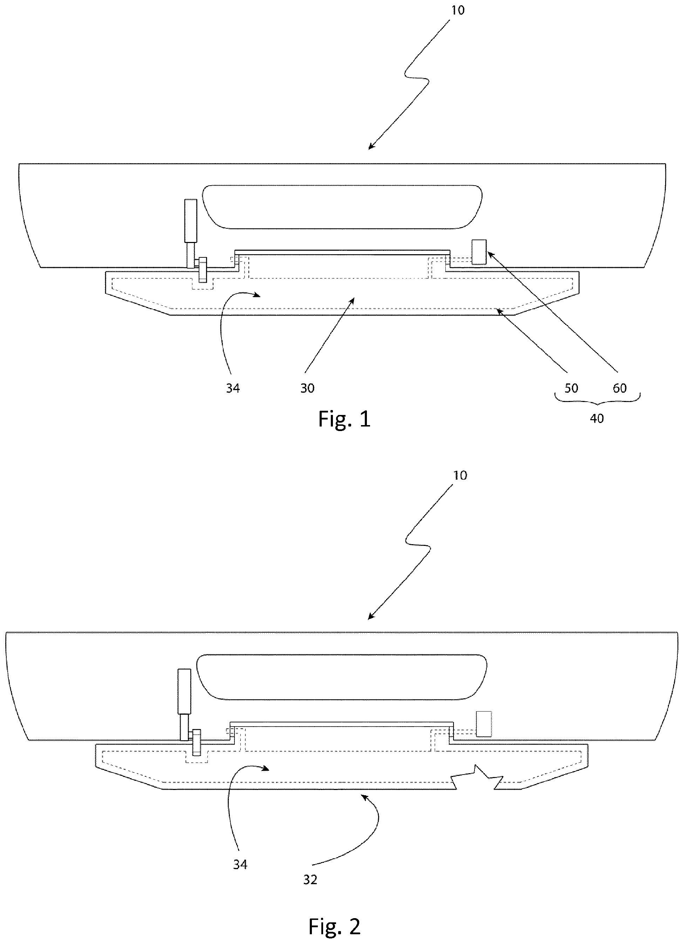

On se réfère maintenant à la figure 1 qui illustre un exemple d'une pièce extérieure 10 de véhicule automobile. Selon cet exemple, la pièce extérieure est mobile et constitue un système aérodynamique rétractable 10 pour véhicule automobile 20. Le système 10 comprend au moins une lame aérodynamique 30.

Le système 10 comprend également un système de contrôle 40 de l'intégrité de la lame aérodynamique 30, c'est-à-dire un contrôle de la conformité de la pièce à la réalisation de la fonction à laquelle cette pièce est destinée. L'intégrité qualifie donc la capacité de la pièce à remplir sa fonction. Le contrôle de l'intégrité permet de détecter si la pièce est brisée, ou même si la pièce est déformée au point de ne plus accomplir correctement sa fonction.

Ce système de contrôle 40 comporte :
- un circuit électrique 50 positionné sur une face 32 de la lame 30 ;
- un dispositif de détection 60 apte à déterminer une variation d'un paramètre électrique du circuit électrique 50, et notamment apte à déterminer l'état ouvert ou fermé du circuit électrique 50.

Le circuit électrique 50 est positionné de façon à pouvoir détecter tout endommagement de la lame aérodynamique 30. Pour ce faire, le circuit 50 est avantageusement positionné de façon à couvrir une zone apte à être cassée en cas de choc. Généralement, en cas de choc, au moins une zone de la périphérie de la lame aérodynamique 30 sera brisée. Il est aussi très probable que la zone de l'axe de rotation de la lame aérodynamique 30 soit déformée.

Ainsi, selon un mode de réalisation avantageux, le circuit électrique 50 suit sensiblement la périphérie de la face 32 sur laquelle le circuit électrique 50 est positionné.

Selon un autre mode de réalisation, le circuit électrique 50 est positionné dans la zone de l'axe de rotation 36 de la lame aérodynamique 30, et plus particulièrement les zones en contact avec les paliers reliés à une partie fixe du véhicule, qui sont généralement les extrémités de cet axe de rotation.

Selon encore un autre mode de réalisation, le circuit électrique 50 est positionné dans une zone centrale de la face 32 sur laquelle le circuit électrique 50 est positionné.

Bien évidemment, ces trois modes de réalisations peuvent être combinés, afin de détecter toute dégradation de la lame aérodynamique 30.

Le circuit électrique 50 est rapporté sur la face 32 par tous procédés connus des spécialistes : collage, adhésivage, fixation mécanique (agrafes...), soudure... Lorsque la lame aérodynamique 30 est en matière plastique, on rapporte avantageusement le circuit électrique 50 au moyen d'un procédé de surmoulage.

La lame aérodynamique 30 comporte une face 34 destinée à faire front au flux d'air lorsque le système aérodynamique rétractable 10 est monté sur un véhicule en mouvement, et que la lame 30 est en position déployée. La lame aérodynamique 30 comporte également une face opposée 32 à cette face 34.

De façon avantageuse, le circuit électrique 50 est positionné sur la face opposée 32, pour des raisons esthétiques et pour protéger le circuit électrique 50, par exemple en protection contre le gravillonnage.

Selon l'exemple de réalisation illustré sur les figures, le circuit électrique 50 comporte un fil conducteur dont chaque extrémité est reliée au dispositif de détection 60. Ce fil conducteur est apte à faire circuler un courant dans le circuit électrique 50, de préférence un courant d'intensité inférieure à 100 milliampères.

Le dispositif de détection 60 est apte à déterminer une variation d'un paramètre électrique du circuit électrique 50, lorsque ce circuit 50 subit une déformation. Il peut s'agir par exemple de l'ampérage. Ainsi, à la suite d'un impact subi par la lame aérodynamique 30, le circuit électrique 50 se déforme, induisant une variation du paramètre électrique détectée par le dispositif de détection 60. Le dispositif de détection 60 détecte donc une variation caractéristique du paramètre électrique, par exemple une baisse d'ampérage sous un seuil correspondant à une déformation importante, sans retour élastique, du circuit 50.

En particulier, le dispositif de détection 60 est apte à déterminer l'état ouvert ou fermé du circuit électrique 50. Ainsi, selon un mode de réalisation, le fil conducteur est apte à être coupé lorsque la lame aérodynamique 30 est brisée à la suite d'un impact. Pour ce faire, le spécialiste saura trouver le matériau, la forme et la taille adéquats, pour que les tenues mécaniques soient similaires. Par exemple, on peut utiliser un fil de cuivre fin. Ce fil devra être facilement sécable.

Le système aérodynamique rétractable 10 selon l'invention comporte ainsi un système de contrôle 40 de l'intégrité de sa lame aérodynamique 30. En effet, si la lame 30 est brisée sous l'effet d'un choc, alors le circuit électrique 50 est rompu et se trouve donc en position ouverte.

Le dispositif de détection 60 détecte alors que le circuit électrique 50 est ouvert.

Suite à cette détection, le système de contrôle 40 de l'intégrité envoie un message à l'utilisateur du véhicule. Par exemple, un message est envoyé au calculateur du tableau de bord du véhicule, afin d'alerter l'usager que la lame aérodynamique 30 est endommagée.

L'invention n'est pas limitée aux modes de réalisation présentés et d'autres modes de réalisation apparaîtront clairement à l'homme du métier. Il est notamment possible que la pièce extérieure 10 constitue un diffuseur arrière, un spoiler, un système aérodynamique latérale (dans une porte, du type « ouïes »), ou encore des volets actifs de grille d'entrée d'air (« active shutters »).

### Liste des références

- 10 :: pièce extérieure 10 de véhicule automobile - système aérodynamique rétractable pour véhicule automobile 20
- 20 :: véhicule automobile
- 30 :: lame aérodynamique du système aérodynamique rétractable 10
- 32 :: face de la lame 30 orientée vers l'avant du véhicule 20
- 34 :: face de la lame 30 opposée à la face 32, et orientée vers l'arrière du véhicule 20
- 36 :: axe de rotation de la lame aérodynamique 30
- 40 :: système de contrôle de l'intégrité de la lame aérodynamique 30
- 50 :: circuit électrique du système de contrôle 40
- 60 :: dispositif de détection du système de contrôle 40

## Revendications

1. Pièce extérieure (10) de véhicule automobile (20), comprenant un élément (30), **caractérisée en ce qu'**elle comporte un système de contrôle (40) de l'intégrité de l'élément (30), le système de contrôle (40) comportant un circuit électrique (50) positionné sur une face (32) de l'élément (30) et relié à un dispositif de détection (60) apte à déterminer une variation d'un paramètre électrique du circuit électrique (50) induite par une déformation dudit circuit électrique (50).

2. Pièce extérieure (10) selon la revendication précédente, dans laquelle le dispositif de détection (60) est apte à déterminer l'état ouvert ou fermé du circuit électrique (50).

3. Pièce extérieure (10) selon l'une des revendications précédentes, dans laquelle le circuit électrique (50) suit sensiblement la périphérie de la face (32) sur laquelle le circuit électrique (50) est positionné.

4. Pièce extérieure (10) (10) selon l'une des revendications précédentes, dans laquelle le circuit électrique (50) est positionné dans une zone centrale de la face (32) sur laquelle le circuit électrique (50) est positionné.

5. Pièce extérieure (10) selon l'une des revendications précédentes, dans laquelle l'élément (30) est mobile.

6. Pièce extérieure (10) selon la revendication précédente, dans laquelle l'élément (30) est rétractable.

7. Pièce extérieure (10) selon la revendication précédente, dans laquelle le circuit électrique (50) est positionné dans une zone d'un axe de rotation de l'élément rétractable (30).

8. Pièce extérieure (10) selon l'une des revendications précédentes, dans laquelle le circuit électrique (50) est rapporté sur la face (32) par surmoulage, collage, adhésivage, soudure ou fixation mécanique telle qu'une agrafe, ou rivet.

9. Pièce extérieure (10) selon l'une des revendications précédentes, dans laquelle le circuit électrique (50) comporte un fil conducteur dont chaque extrémité est reliée au dispositif de détection (60).

10. Pièce extérieure (10) selon l'une des revendications 2 à 9, dans laquelle le fil conducteur est apte à être coupé lorsque l'élément (30) est brisé à la suite d'un impact.

11. Pièce extérieure (10) selon l'une des revendications précédentes, dans laquelle le dispositif de détection (60) est apte à faire circuler un courant dans le circuit électrique (50), de préférence un courant d'intensité inférieure à une centaine de milliampères.

12. Pièce extérieure (10) selon l'une des revendications précédentes, dans laquelle le système de contrôle (40) de l'intégrité de l'élément (30) est apte à envoyer un message à un calculateur du tableau de bord d'un véhicule, lorsque le dispositif de détection (60) détecte une variation caractéristique du paramètre électrique.

13. Pièce extérieure (10) selon l'une des revendications précédentes, dans laquelle le système de contrôle (40) de l'intégrité de l'élément (30) est apte à envoyer un message à un calculateur du tableau de bord d'un véhicule, lorsque le dispositif de détection (60) détecte que le circuit électrique (50) est ouvert.

14. Pièce extérieure (10) selon l'une des revendications précédentes, constituant un système aérodynamique rétractable (10) pour véhicule automobile (20) comprenant au moins une lame aérodynamique (30).

15. Pièce extérieure (10) selon la revendication précédente, dans laquelle la lame aérodynamique (30) comporte une face (34) destinée à faire front à un flux d'air lorsqu'il est monté sur un véhicule en mouvement, est une face opposée (32), le circuit électrique (50) étant positionné sur la face opposée (32).

16. Pièce extérieure (10) selon l'une des revendications précédentes, dans laquelle le paramètre électrique est l'ampérage du circuit électrique (50).

## Patentansprüche

1. Außenteil (10) eines Kraftfahrzeugs (20), das ein Element (30) aufweist, **dadurch gekennzeichnet, dass** es ein Kontrollsystem (40) für die Integrität des Elements (30) aufweist, wobei das Kontrollsystem (40) einen elektrischen Schaltkreis (50) aufweist, der auf einer Fläche (32) des Elements (30) positioniert und mit einer Erfassungsvorrichtung (60) verbunden ist, die eingerichtet ist, eine Veränderung eines elektrischen Parameters des elektrischen Schaltkreises (50) zu bestimmen, die durch eine Verformung des elektrischen Schaltkreises (50) induziert wird.

2. Außenteil (10) nach dem vorhergehenden Anspruch, wobei die Erfassungsvorrichtung (60) eingerichtet ist, den offenen oder geschlossenen Zustand des elektrischen Schaltkreises (50) zu bestimmen.

3. Außenteil (10) nach einem der vorhergehenden Ansprüche, wobei der elektrische Schaltkreis (50) im Wesentlichen dem Umfang der Fläche (32) folgt, auf der der elektrische Schaltkreis (50) positioniert ist.

4. Außenteil (10) nach einem der vorhergehenden Ansprüche, wobei der elektrische Schaltkreis (50) in einem zentralen Bereich der Fläche (32) positioniert ist, auf der der elektrische Schaltkreis (50) positioniert ist.

5. Außenteil (10) nach einem der vorhergehenden Ansprüche, bei dem das Element (30) beweglich ist.

6. Außenteil (10) nach dem vorhergehenden Anspruch, bei dem das Element (30) einziehbar ist.

7. Außenteil (10) nach dem vorhergehenden Anspruch, wobei der elektrische Schaltkreis (50) in einem Bereich einer Drehachse des einziehbaren Elements (30) positioniert ist.

8. Außenteil (10) nach einem der vorhergehenden Ansprüche, bei dem der elektrische Schaltkreis (50) auf der Fläche (32) durch Umspritzen, Kleben, Kleben, Schweißen oder mechanische Befestigung wie eine Klammer oder Niete angebracht ist.

9. Außenteil (10) nach einem der vorhergehenden Ansprüche, wobei die elektrische Schaltung (50) einen leitenden Draht aufweist, dessen jedes Ende mit der Erfassungsvorrichtung (60) verbunden ist.

10. Außenteil (10) nach einem der Ansprüche 2 bis 9, wobei der leitende Draht eingerichtet ist, durchtrennt zu werden, wenn das Element (30) infolge eines Aufpralls zerbrochen wird.

11. Außenteil (10) nach einem der vorhergehenden Ansprüche, wobei die Erfassungsvorrichtung (60) eingerichtet ist, einen Strom durch den elektrischen Schaltkreis (50) fließen zu lassen, vorzugsweise einen Strom mit einer Stromstärke von weniger als hundert Milliampere.

12. Außenteil (10) nach einem der vorhergehenden Ansprüche, wobei das Kontrollsystem (40) für die Integrität des Elements (30) eingerichtet ist, eine Nachricht an einen Rechner des Armaturenbretts eines Fahrzeugs zu senden, wenn die Erfassungsvorrichtung (60) eine charakteristische Veränderung des elektrischen Parameters erfasst.

13. Außenteil (10) nach einem der vorhergehenden Ansprüche, wobei das Kontrollsystem (40) für die Integrität des Elements (30) eingerichtet ist, eine Nachricht an einen Rechner des Armaturenbretts eines Fahrzeugs zu senden, wenn die Erfassungsvorrichtung (60) erfasst, dass der elektrische Schaltkreis (50) offen ist.

14. Außenteil (10) nach einem der vorhergehenden Ansprüche, das ein einziehbares aerodynamisches System (10) für ein Kraftfahrzeug (20) bildet, das mindestens eine aerodynamische Lamelle (30) aufweist.

15. Außenteil (10) nach dem vorhergehenden Anspruch, wobei die aerodynamische Lamelle (30) eine Fläche (34), die dazu bestimmt ist, einem Luftstrom gegenüberzustehen, wenn sie an einem fahrenden Fahrzeug angebracht ist, und eine gegenüberliegende Fläche (32) aufweist, wobei die elektrische Schaltung (50) auf der gegenüberliegenden Fläche (32) positioniert ist.

16. Außenteil (10) nach einem der vorhergehenden Ansprüche, wobei der elektrische Parameter die Amperezahl des elektrischen Schaltkreises (50) ist.

## Claims

1. Outer part (10) of a motor vehicle (20), comprising a component (30), **characterised in that** it comprises a checking system (40) for the element (30) integrity, the checking system (40) comprising an electrical circuit (50) positioned on one face (32) of the element (30) and connected to a detection device (60) capable of determining an electrical parameter variation of the electrical circuit (50) caused by a deformation of the said electrical circuit (50).

2. Outer part (10) according to the preceding claim, wherein the detection device (60) is capable of determining the open or closed state of the electrical circuit (50).

3. Outer part (10) according to one of the preceding claims, wherein the electrical circuit (50) substantially follows the face periphery (32) on which the electrical circuit (50) is positioned.

4. Outer part (10) according to one of the preceding claims, wherein the electrical circuit (50) is positioned in a central area of the face (32) on which the electrical circuit (50) is positioned.

5. Outer part (10) according to one of the preceding claims, in which the element (30) is mobile.

6. Outer part (10) according to the preceding claim, wherein the element (30) is retractable.

7. Outer part (10) according to the preceding claim, wherein the electrical circuit (50) is positioned in an area of an axis of rotation of the retractable element (30).

8. Outer part (10) according to one of the preceding claims, wherein the electrical circuit (50) is placed on the face (32) by overmolding, gluing, adhesive, welding or mechanical fastening such as a staple, or rivet.

9. Outer part (10) according to one of the preceding claims, wherein the electrical circuit (50) comprises a conductive wire, each end of this latter being connected to the detection device (60).

10. Outer part (10) according to one of claims 2 to 9, wherein the conductor wire is suitable for cutting when the element (30) is broken as a result of an impact.

11. Outer part (10) according to one of the preceding claims, wherein the detection device (60) is capable of circulating a current in the electrical circuit (50), preferably a current of intensity less than a hundred milliamperes.

12. Outer part (10) according to one of the preceding claims, wherein the checking system (40) of the element (30) integrity is capable of sending a message to an ECU on a vehicle dashboard, when the detection device (60) detects a specific variation of the electrical parameter.

13. Outer part (10) according to one of the preceding claims, wherein the checking system (40) of the element (30) integrity is capable of sending a message to an ECU on a vehicle dashboard, when the detection device (60) detects that the electrical circuit (50) is open.

14. Outer part (10) according to one of the preceding claims, constituting a retractable aerodynamic system (10) for motor vehicle (20) comprising at least one aerodynamic blade (30).

15. Outer part (10) according to the preceding claim, wherein the aerodynamic blade (30) has a face (34) intended to face an airflow when mounted on a moving vehicle, and an opposite face (32), the electrical circuit (50) being positioned on the opposite side (32).

16. Outer part (10) according to one of the preceding claims, wherein the electrical parameter is the amperage of the electrical circuit (50).
